(19) Europäisches Patentamt
European Patent Office
Office européen des brevets

(11) **EP 3 376 466 A1**

(12) **EUROPÄISCHE PATENTANMELDUNG**

(43) Veröffentlichungstag:
**19.09.2018 Patentblatt 2018/38**

(51) Int Cl.:
***G06T 5/00*** *(2006.01)*

(21) Anmeldenummer: **17160756.7**

(22) Anmeldetag: **14.03.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Siemens Healthcare GmbH**
**91052 Erlangen (DE)**

(72) Erfinder:
• **Flohr, Thomas**
  **91486 Uehlfeld (DE)**
• **Stierstorfer, Karl**
  **91052 Erlangen (DE)**

(54) **ENTRAUSCHUNG EINES VOLUMENBILDDATENSATZES EINES OBJEKTS**

(57) Die Erfindung betrifft ein Verfahren zur Entrauschung eines Volumenbilddatensatzes (X) eines Objekts (O). Hierzu werden ein Volumenbilddatensatz (X) und ein Basiselement-Verzeichnis (D) umfassend eine Anzahl von Volumen-Basiselementen ($P_1$, $P_2$, ..., $P_N$) bereitgestellt. Es werden dann Volumenbild-Teilmengen (I) des Volumenbilddatensatzes (X) erstellt und zumindest ein Teil der Volumenbild-Teilmengen(I) wird durch eine Linearkombination (L) von Volumen-Basiselementen ($P_1$, $P_2$, ..., $P_N$) des Basiselement-Verzeichnisses (D) nachgebildet. Es wird dann ein rauschreduzierter Volumenbilddatensatz (Y) unter Nutzung der Linearkombination (L) von Volumen-Basiselementen ($P_1$, $P_2$, ..., $P_N$) der Volumenbild-Teilmengen (I) erzeugt. Die Erfindung betrifft des Weiteren ein Verfahren zur Erstellung des vorgenannten Basiselement-Verzeichnisses (D), eine Entrauschungsvorrichtung (19) sowie eine Steuereinrichtung (10) zur Steuerung eines medizintechnischen Bildgebungssystems (1).

## FIG 1

FIG 2

$$\mathrm{I} \rightarrow a_1 \, P_1 + a_2 \, P_2 + \ldots + a_N \, P_N$$

$$\underbrace{\phantom{a_1 \, P_1 + a_2 \, P_2 + \ldots + a_N \, P_N}}_{L}$$

**Beschreibung**

Die Erfindung betrifft ein Verfahren sowie eine Entrauschungseinrichtung zur Entrauschung eines, insbesondere mit Hilfe eines medizintechnischen Bildgebungssystems erstellten, Volumenbilddatensatzes eines Objekts. Die Erfindung betrifft ebenso eine Steuereinrichtung für ein medizintechnisches Bildgebungssystem bzw. ein medizintechnisches Bildgebungssystem mit einer solchen Entrauschungseinrichtung. Des Weiteren betrifft die Erfindung ein Verfahren zur Erstellung eines Basiselement-Verzeichnisses, das für eine derartige Entrauschung eines Volumenbilddatensatzes eines Objekts genutzt werden kann.

Bildgebende Systeme wie Computertomographen, Magnetresonanzsysteme etc. nehmen heute im medizinischen Bereich eine bedeutende Rolle ein. Die von den bildgebenden Systemen erzeugten Darstellungen der inneren Organe und Strukturen des Patienten werden zur Diagnose von Krankheitsursachen, zur Planung und Durchführung von Operationen oder auch zur Vorbereitung von therapeutischen Maßnahmen angewandt. Die neue Generation von Computertomographiesystemen erlaubt dabei ebenso wie Magnetresonanzsysteme großvolumige Untersuchungen, die im Maximalfall Ganzkörperuntersuchungen sein können.

Oftmals ist es zur Aufnahme von Bildern von medizintechnischen Einrichtungen notwendig, den Patienten Einflüssen auszusetzen, die für den menschlichen Körper je nach Dosierung eine Belastung darstellen können. Beispiele dazu sind ionisierende elektromagnetische Strahlung (z. B. Röntgenstrahlung) oder Partikelstrahlung (z. B. Betastrahlung). Es wird angestrebt, dass die notwendige Strahlenbelastung für eine Bildaufnahme für den menschlichen Körper so gering wie möglich ist.

Problematisch ist dabei, dass bei einer Reduzierung der Strahlung das Rauschen der Bildaufnahme zunimmt, so dass unter einer bestimmten Strahlungsintensität das Rauschen in den Bildern so groß ist, dass aus ihnen kein zufriedenstellender medizinischer Befund mehr möglich ist. Dabei muss insbesondere beachtet werden, dass kleine Strukturen auf einem Bild schneller in einem Bildrauschen untergehen als große.

Nachteil des Stands der Technik ist, dass entweder mit einer nichtoptimalen Strahlungsbelastung oder einem nichtoptimalen Rauschverhältnis gemessen wird.

Zwar existieren bereits mannigfaltige Verfahren zur Bildentrauschung, jedoch betreffen diese lediglich zweidimensionale Bilder, so dass keine optimale Entrauschung von aufgenommenen Bilddaten vorgenommen werden kann. Beispielsweise werden in der Regel kleine Strukturen des Objekts, die orthogonal zur Schnittebene der zweidimensionalen Bilder liegen, fälschlicherweise als Rauschen eingestuft, da sie als kleine Punkte in den zweidimensionalen Bildern auftauchen. Weitere Entrauschungsverfahren sind aus den Druckschriften US 8600137 B2 und US 8605977 B2 bekannt.

Es ist eine Aufgabe der vorliegenden Erfindung, ein verbessertes Verfahren und eine entsprechende Entrauschungseinrichtung zur Entrauschung von Volumenbilddaten sowie eine entsprechend ausgestattete Steuereinrichtung zur Steuerung eines medizintechnischen Bildgebungssystems bzw. ein entsprechend ausgestattetes medizintechnisches Bildgebungssystem anzugeben.

Diese Aufgabe wird durch ein Verfahren gemäß Patentanspruch 1, durch eine Entrauschungsvorrichtung gemäß Patentanspruch 11 sowie eine Steuereinrichtung bzw. ein medizintechnisches Bildgebungssystem gemäß Patentanspruch 12 gelöst.

Bei einem erfindungsgemäßen Verfahren zur Entrauschung eines Volumenbilddatensatzes eines Objekts wird zunächst ein zu entrauschender Volumenbilddatensatz bereitgestellt. Solche Volumenbilddatensätze umfassen allgemein Volumenbilddaten eines meist dreidimensionalen Objekts. Beispielsweise kann eine Computertomographieaufnahme oder eine Magnetresonanztomographieaufnahme eines menschlichen Körpers oder von dessen Teilen als ein solcher Volumenbilddatensatz angesehen werden. Der Volumenbilddatensatz kann dabei auch in unterschiedlicher Form erstellt und/oder hinterlegt worden sein, beispielsweise als ein Datensatz in Form eines Stapels von zweidimensionalen Aufnahmen oder als ein Datensatz, welcher die Werte für die Bildpunkte bzw. Voxel des erfassten Volumens (und deren räumliche Zuordnung) in anderer Weise enthält. Die dritte Dimension des Volumenbilddatensatz kann dabei eine dritte Richtung im Ortsraum sein. Grundsätzlich kann aber zumindest eine Dimension auch eine Zeit sein, z. B. zu der die zweidimensionalen Aufnahmen erfasst wurden. Insofern kann der später noch verwendete Begriff "Raumrichtungen" auch eine zeitliche Dimension umfassen. In den meisten Anwendungen handelt es sich aber um Richtungen im Ortsraum. Jedoch sind auch höhere Dimensionen als drei möglich, wenn z.B. eine Zeitkomponente mit berücksichtigt wird, z.B. ein vierdimensionaler Volumenbilddatensatz, welcher sich aus mehreren zeitlich nacheinander erfassten Ortsraum-Volumenbilddatensätzen ergibt. In zweidimensionalen Bilddaten werden die Bildpunkte üblicherweise als "Pixel" und in zumindest dreidimensionalen Volumenbilddaten meist als "Voxel" bezeichnet. Bei dreidimensionalen Volumenbilddaten, die aus zweidimensionalen Schnittbildern zusammengesetzt wurden, würde ein Pixel eines Schnittbildes einem Voxel im Volumenbilddatensatz entsprechen, denn bei Bildern, welche nur ein Voxel dick sind, verschwimmt im Prinzip der Unterschied zwischen Pixeln und Voxeln, da der Informationsgehalt jedes Bildpunktes derselbe ist.

Grundsätzlich bezieht sich der Begriff "Objekt" auf alle möglichen dreidimensionalen Gegenstände, wobei auch Teile von Gegenständen als "Objekt" bezeichnet werden können. Beispielsweise ist das erfindungsgemäße Verfahren zur Verbesserung von Aufnahmen eines kompletten Körpers, aber auch zur Verbesserung von Aufnahmen eines Körperteils oder eines Organs geeignet. Im Übrigen müssen die Volumenbilddaten nicht zwingend von einem menschlichen Körper stammen, sondern können z. B. auch von Tieren oder Pflanzen, mumifizierten Objekten oder sonstigen Objekten, beispielsweise zu prüfenden technischen Gegenständen oder dergleichen, erstellt sein.

Gemäß dem erfindungsgemäßen Verfahren wird ein Basiselement-Verzeichnis bereitgestellt. Ein solches Basiselement-Verzeichnis wird vom Fachmann auch in der deutschen Sprache oft mit dem ursprünglich englischen Wort "Dictionary" bezeichnet und ist in der Regel ein Datensatz, der eine vorbestimmte Menge von Volumen-Basiselementen umfasst. Diese Volumen-Basiselemente werden auch als "Primitive" oder "Grundformen" bezeichnet und können charakteristische Grundelemente eines Bildes darstellen. Beispiele für ein Volumen-Basiselement sind ein Quader, eine Kugel, ein Würfel, ein Zylinder, ein Kegel oder ein Torus. Aber auch andere Elemente, wie z.B. die Spektralkoeffizienten einer diskreten Cosinustransformation (DCT) oder sonstige, insbesondere wiederkehrende, Strukturen eines Bildes können als Volumen-Basiselemente bezeichnet werden, sofern diese zumindest dreidimensional sind, wobei eine Dimension auch eine Zeitkomponente sein kann. Insbesondere sind auch höhere Dimensionen als drei möglich, wenn z.B. eine Zeitkomponente mit berücksichtigt wird. Die Volumen-Basiselemente sind dabei in Rastergrafiken oder dergleichen in der Regel als Gruppen von Bildpunkten mit ihren Werten hinterlegt. Im Folgenden werden diese zumindest dreidimensionalen Volumen-Basiselemente auch manchmal verkürzt einfach als "Basiselemente" bezeichnet.

Aus dem Volumenbilddatensatz werden Volumenbild-Teilmengen (im Englischen werden zweidimensionale Bildblöcke meist "Patch" genannt, weshalb im Folgenden auch dieser Begriff als kürzeres Synonym für eine Volumenbild-Teilmenge verwendet wird) gebildet, die auch als "Bildbereiche" bezeichnet werden können. Dabei kann der Volumenbilddatensatz, wie später noch erläutert, in Untermengen zerteilt werden oder der Volumenbilddatensatz kann durch Rasterung mit einer Maske eines Bildelements untersucht werden.

Die Volumenbild-Teilmengen können daraufhin mittels einer Linearkombination von Volumen-Basiselemente des Basiselement-Verzeichnisses nachgebildet werden. Anschaulich könnte man diesen Schritt auch als eine Art "Rekonstruktion" des entsprechenden Bildbereichs mit Bildelementen des Dictionarys bzw. als eine Art "Zerlegung" des Inhalts des entsprechenden Bildbereichs in eine Linearkombination von Basiselementen beschreiben. Dieser Schritt kann in einem numerischen Optimierungsverfahren mittels geeigneter Software durchgeführt werden. Möglichkeiten einer solchen Optimierung werden weiter unten ausführlicher beschrieben.

Erfindungsgemäß wird eine solche Nachbildung zumindest für einen Teil der Volumenbild-Teilmengen des Volumenbilddatensatzes durchgeführt. Es ist zwar grundsätzlich bevorzugt, dass dies für alle Volumenbild-Teilmengen geschieht, jedoch kann es je nach Fall der Anwendung auch vorteilhaft sein, bestimmte Teilmengen nicht nachzubilden, weil sie z. B. keine relevante Information beinhalten, aufgrund einer angestrebten genaueren Untersuchung unverändert bleiben sollen oder weil sie aus anderen Gründen nicht nachgebildet werden sollen.

Der angestrebte rauschreduzierte Volumenbilddatensatz wird dann unter Nutzung der Linearkombination von Basiselementen der Volumenbild-Teilmengen erzeugt. Beispielsweise kann der rauschreduzierte Volumenbilddatensatz durch eine Kombination der durch die Linearkombination von Basiselementen erzeugten Nachbildungen der Volumenbild-Teilmengen generiert werden.

Für die Durchführung des Entrauschungsverfahrens wird wie erwähnt ein Basiselement-Verzeichnis (Dictionary) umfassend eine Menge von Volumen-Basiselementen benötigt. Dieses Basiselement-Verzeichnis kann zu einem beliebigen Zeitpunkt vorher erstellt worden sein und in einem Speicher für die spätere Verwendung zur Entrauschung verschiedenster Bilddaten hinterlegt sein.

Bei einem erfindungsgemäßen Verfahren zur Erstellung eines solchen Basiselement-Verzeichnisses wird zunächst ein Trainings-Volumenbilddatensatz bereitgestellt. Ein solcher Trainings-Volumenbilddatensatz sollte vorzugsweise dem zu entrauschenden Volumenbilddatensatz entsprechen, d. h. es wird bevorzugt darauf geachtet, dass die Art des Trainings-Volumenbilddatensatzes, beispielsweise die Art der Erzeugung des Trainings-Volumenbilddatensatzes oder die aufgenommenen Objekttypen, einander ähneln bzw. entsprechen.

Möchte man, wie bei dem bevorzugten Einsatz, Volumenbilddaten vom Inneren eines menschlichen oder tierischen Körpers entrauschen, die in einem medizintechnischen bildgebenden Verfahren erzeugt wurden, sollten vorzugsweise für den Trainings-Volumenbilddatensatz auch derartige Volumenbilddaten verwendet werden.

Vorzugsweise sollte wie erwähnt auch die technische Art und Weise des Bildaufnahmeverfahrens vergleichbar sein. Sollen Aufnahmen entrauscht werden, die mit einem Gerät einer bestimmten Kategorie gemacht wurden, könnte vorzugsweise das Gerät, mit dem die Bilddaten für den Trainings-Volumenbilddatensatz erstellt wurden, von derselben Kategorie sein, gegebenenfalls sogar ein gleiches Gerät. Wenn beispielsweise Volumenbilddaten eines Computertomographen entrauscht werden sollen, sollten bevorzugt die Bildaufnahmen für den Trainings-Volumenbilddatensatz auch von Computertomographen stammen. Dies hat den Vorteil, dass sich spezifische, technisch bedingte Besonderheiten eines Aufnahmegeräts auch in dem Trainings-Volumenbilddatensatz wiederfinden.

Vorzugsweise wird ein Trainings-Volumenbilddatensatz gewählt, dessen Bildqualität besser als die der zu entrauschenden Volumenbilddaten ist, zumindest derart, dass er ein geringeres Rauschen aufweist als der vorgenannte zur Entrauschung vorgesehene Volumenbilddatensatz. Beispielsweise kann der Trainings-Volumenbilddatensatz zuvor aus anderen medizinischen Gründen mit einer höheren Strahlendosis aufgenommen worden sein.

In der Regel ist es aber so, dass das Objekt, welches als Basis des Trainings-Volumenbilddatensatzes dient, nicht identisch mit dem Objekt ist, dessen Volumenbilddaten entrauscht werden. So ist es bei einer geplanten schonenden Untersuchung eines Patienten selten, dass bereits vorher von ihm Aufnahmen mit einer höheren Strahlendosis gemacht worden sind. Jedoch können dann z. B. Aufnahmen anderer Patienten, welche aus anderen medizinischen Gründen mit einer höheren Strahlendosis und besserer Bildqualität aufgenommen worden sind, zur Erstellung des Trainings-Volumenbilddatensatzes verwendet werden, wobei davon ausgegangen wird, dass sich die Aufnahmen von menschlichen Körpern bis auf einige individuelle Besonderheiten im Großen und Ganzen ähnlich sind.

Um spezielle Dictionaries für die Entrauschung von Volumenbilddaten bestimmter Organe zur Verfügung zu stellen, können auch gezielt Bilddaten von solchen Organen als Basis für den Trainings-Volumenbilddatensatz dienen.

Ebenso könnten auch zur Erstellung spezieller Dictionaries für andere Stoffe und/oder Objekte entsprechende Trainings-Volumenbilddatensätze solcher für andere Stoffe und/oder Objekte dienen.

Vorzugsweise basiert der zu entrauschende Volumenbilddatensatz des Objekts aber wie erwähnt auf Messdaten eines bildgebenden medizintechnischen Bildgebungssystems, d. h. er wurde beispielsweise aus Rohdaten rekonstruiert, die mit diesem Bildgebungssystem gemessen wurden.

Der Trainings-Volumenbilddatensatz kann auch Volumenbilddaten mehrerer einander entsprechender Objekte umfassen. Die Verwendung der Volumenabbildungen mehrerer entsprechender, aber nicht notwendigerweise identischer Objekte in dem Trainings-Volumenbilddatensatz hat den Vorteil einer statistischen Verbesserung der Ergebnisse.

Eine andere Möglichkeit ist, dass der Trainings-Volumenbilddatensatz alternativ oder zusätzlich zu Aufnahmen von realen Objekten auch simulierte bzw. berechnete Volumenbilddaten von entsprechenden Objekten umfasst. In diesem Falle ist es von Vorteil, wenn diese so simuliert/ berechnet sind, als würden sie von einem entsprechenden Gerät stammen.

Im weiteren Verlauf des erfindungsgemäßen Verfahrens zur Erstellung eines Basiselement-Verzeichnisses werden Volumenbild-Teilmengen des Trainings-Volumenbilddatensatzes gebildet. Dies kann auf die gleiche Art geschehen, wie bereits oben im Zuge des Entrauschungsverfahrens beschrieben.

Danach werden Basiselemente in den Volumenbild-Teilmengen ermittelt und ein Basiselement-Verzeichnis aus den ermittelten Basiselementen der Volumenbild-Teilmengen gebildet. Insbesondere erfolgt dies nach Regeln zum maschinellen Lernen. Ein bevorzugtes Verfahren hierzu wird später noch erläutert.

Eine erfindungsgemäße Entrauschungsvorrichtung (welche auch als Bildbearbeitungseinrichtung bezeichnet werden könnte) zur Entrauschung eines Volumenbilddatensatz, z.B. der Volumenbilddaten eines medizintechnischen Bildgebungssystems bzw. einer bildgebenden Anlage, verwendet insbesondere das erfindungsgemäße Verfahren zur Entrauschung und nutzt bevorzugt dazu ein mit dem betreffenden erfindungsgemäßen Verfahren erstelltes Basiselement-Verzeichnis.

Sie umfasst mindestens eine Schnittstelle, mittels derer ein Volumenbilddatensatz an die Entrauschungsvorrichtung bereitgestellt werden kann. Diese Schnittstelle kann physisch vorhanden sein, wie z. B. ein Bussystem oder ein Interface zur Datenübertragung, insbesondere USB, LAN, WLAN, oder sie kann softwareseitig vorhanden sein und z.B. eine Protokollstruktur darstellen.

Die Entrauschungsvorrichtung umfasst des Weiteren eine Speichereinheit, in der ein Basiselement-Verzeichnis enthalten ist, welches insbesondere wie vorangehend beschrieben erstellt worden ist. Beispielsweise kann dieses Basiselement-Verzeichnis in einer Datenbank abgelegt vorliegen, aber auch als Datei auf einem Speicherelement oder im RAM. Dieses Basiselement-Verzeichnis umfasst eine Anzahl von Basiselementen zur Bereitstellung für die Entrauschung. Dies können z. B. Basiselemente ("Primitive") sein, wie sie oben beschrieben wurden.

Die erfindungsgemäße Entrauschungsvorrichtung umfasst außerdem erfindungsgemäß eine Entrauschungseinheit, welche dazu ausgelegt ist, Volumenbild-Teilmengen des Volumenbilddatensatzes zu bilden, mindestens eine Volumenbild-Teilmenge mittels einer Linearkombination von Basiselementen des Basiselement-Verzeichnisses nachzubilden und einen rauschreduzierten Volumenbilddatensatz unter Nutzung dieser Linearkombination zu erzeugen. Insbesondere ist die Entrauschungsvorrichtung bzw. deren Entrauschungseinheit also dazu ausgelegt, wie oben erwähnt die Entrauschung nach dem erfindungsgemäßen Verfahren durchzuführen.

Bevorzugt umfasst die erfindungsgemäße Entrauschungsvorrichtung noch eine weitere Schnittstelle zur Weitergabe des entrauschten Volumenbilddatensatzes. Es kann jedoch dafür auch diejenige Schnittstelle verwendet werden, über die die Entrauschungsvorrichtung ihre Daten erhalten hat, sofern diese bidirektional arbeiten kann.

Die erfindungsgemäße Entrauschungsvorrichtung kann als separate Vorrichtung vorliegen, mittels derer insbesondere beliebige dreidimensionale Daten entrauscht werden können, z. B. als eigenständiger Rechner oder Recheneinheit. Ebenso kann die erfindungsgemäße Entrauschungsvorrichtung auch Teil, physischer Teil oder Softwarefunktion, einer übergeordneten Vorrichtung sein, z. B. als Teil einer Workstation an einer Befundungsstation, an der ein Befunder die Volumenbilddaten bearbeiten, betrachten und bewerten kann, oder als integrierter Teil einer Steuereinrichtung eines medizintechnischen bildgebenden Systems.

Eine erfindungsgemäße Steuereinrichtung zur Steuerung eines medizintechnischen Bildgebungssystems ist daher mit einer erfindungsgemäßen Entrauschungsvorrichtung ausgestattet.

Ebenso kann ein erfindungsgemäßes medizintechnisches Bildgebungssystem, vorzugsweise ein Computertomographiesystem, mit einer erfindungsgemäßen Entrauschungsvorrichtung ausgestattet sein, beispielsweise indem diese in die Steuereinrichtung oder andere Komponenten des Bildgebungssystems integriert ist.

Ein Großteil der zuvor genannten Komponenten der Entrauschungsvorrichtung bzw. der Steuereinrichtung, insbesondere die Entrauschungseinheit, aber auch die genannte Schnittstelle, können ganz oder teilweise in Form von Softwaremodulen in einem Prozessor einer entsprechenden Entrauschungsvorrichtung bzw. einer Steuereinrichtung realisiert werden. Eine weitgehend softwaremäßige Realisierung hat den Vorteil, dass auch schon bereits vorhandene z. B. zweidimensional arbeitende Entrauschungsvorrichtungen oder Steuereinrichtungen auf einfache Weise durch ein Software-Update nachgerüstet werden können, um auf die erfindungsgemäße Weise zu arbeiten. Insofern wird die Aufgabe auch durch ein entsprechendes Computerprogrammprodukt mit einem Computerprogramm gelöst, welches direkt in eine Speichereinrichtung einer Entrauschungsvorrichtung bzw. Steuereinrichtung eines Computertomographiesystems oder als ausführbare Datei in ein Computersystem ladbar ist, mit Programmabschnitten, um alle Schritte des betreffenden erfindungsgemäßen Verfahrens auszuführen. Ein solches Computerprogrammprodukt kann neben dem Computerprogramm gegebenenfalls zusätzliche Bestandteile wie z. B. eine Dokumentation und/oder zusätzliche Komponenten, auch Hardware-Komponenten, wie z.B. Hardware-Schlüssel (Dongles etc.) zur Nutzung der Software, umfassen.

Zum Transport zur Entrauschungsvorrichtung bzw. zur Steuereinrichtung und/oder zur Speicherung an oder in der Steuereinrichtung kann ein computerlesbares Medium, beispielsweise ein Memorystick, eine Festplatte oder ein sonstiger transportabler oder fest eingebauter Datenträger dienen, auf welchem die von einer Rechnereinheit der Steuereinrichtung einlesbaren und ausführbaren Programmabschnitte des Computerprogramms gespeichert sind. Die Rechnereinheit kann z. B. hierzu einen oder mehrere zusammenarbeitende Mikroprozessoren oder dergleichen aufweisen.

Wie erwähnt kann das Basiselement-Verzeichnis zu einem beliebigen Zeitpunkt vorher erstellt worden sein. Beispielsweise kann es von einem Anbieter des medizintechnischen Bildgebungssystems zur Verfügung gestellt werden. Die Erfindung umfasst daher auch ein computerlesbares Medium, auf welchem sich mindestens ein von einer Rechnereinheit einlesbares und ausführbares Basiselement-Verzeichnis zur Entrauschung eines Volumenbilddatensatzes befindet. Es kann hierzu entsprechende Volumen-Basiselemente aufweisen, die zur Entrauschung solcher Volumenbilddatensätze geeignet sind. Dieses Basiselement-Verzeichnis ist dabei insbesondere nach dem erfindungsgemäßen Verfahren zur Erstellung eines Basiselement-Verzeichnisses erstellt worden.

Weitere, besonders vorteilhafte Ausgestaltungen und Weiterbildungen der Erfindung ergeben sich aus den abhängigen Ansprüchen sowie der nachfolgenden Beschreibung. Dabei kann die erfindungsgemäße Entrauschungseinrichtung bzw. die erfindungsgemäße medizintechnische bildgebende Anlage auch analog zu den abhängigen Verfahrensansprüchen oder Beschreibungsteilen weitergebildet sein und insbesondere können auch einzelne Merkmale verschiedener Ausführungsbeispiele bzw. Varianten zu neuen Ausführungsbeispielen bzw. Varianten kombiniert werden.

Bevorzugt sind die Volumenbild-Teilmengen so ausgewählt, dass benachbarte Volumenbild-Teilmengen in zumindest einer Raumrichtung, vorzugsweise in mindestens zwei Raumrichtungen, besonders bevorzugt in mindestens drei Raumrichtungen, einander überlappen. Dies hat den Vorteil, dass in dem entrauschten Bild insbesondere solche Artefakte minimiert werden, die aus Übergängen zwischen zwei Bildelementen resultieren.

Gemäß einer bevorzugten Ausführungsform hat ein überwiegender Teil der Volumenbild-Teilmengen, also mehr als 50% der Volumenbild-Teilmengen, bevorzugt mehr als 80% der Volumenbild-Teilmengen, besonders bevorzugt haben alle Volumenbild-Teilmengen die gleiche Größe. Liegen die Volumenbild-Teilmengen in Form von Rastergrafiken vor, haben die Volumenbild-Teilmengen insbesondere die gleiche Menge an Volumenbilddaten bzw. bevorzugt die gleiche Form. Dies hat den Vorteil, dass eine konsistente Nachbildung unterschiedlicher Volumenbild-Teilmengen möglich ist.

Gemäß einer bevorzugten Ausführungsform sind die Volumenbild-Teilmengen um ein Vielfaches kleiner als der Volumenbilddatensatz, bevorzugt kleiner als 1/10, insbesondere kleiner als 1/100 des Volumendatensatzes. Liegen die Volumenbild-Teilmengen in einer Rastergrafik vor, umfassen sie bevorzugt in allen drei Raumrichtungen mindestens zwei Bildpunkte und/oder bevorzugt in allen drei Raumrichtungen maximal 15 Bildpunkte.

In der Regel sind den Volumen-Basiselementen einer Linearkombination zur Nachbildung einer Volumenbild-Teilmenge jeweils Wichtungsfaktoren ("Koeffizienten") zugeordnet. Die folgende Gleichung (1) zeigt eine übliche mathematische Beschreibung einer solchen Linearkombination L, die eine Summe von N Basiselementen $P_i$ umfasst, welche mit Wichtungsfaktoren $a_i$ (i = 1 bis N) in die Linearkombination eingehen.

$$L = a_1 P_1 + a_2 P_2 + \ldots + a_N P_N = \sum_i^N a_i P_i \qquad (1)$$

Um eine effektive Entrauschung zu erreichen, ist es vorteilhaft, wenn die Anzahl der Terme in der Linearkombination, d. h. die Anzahl der verwendeten Basiselemente zur Rekonstruktion einer Volumenbild-Teilmenge (d. h. eines Patches), möglichst gering ist, wobei trotzdem eine möglichst hohe Ähnlichkeit zwischen rekonstruiertem Patch und echtem Patch, also dem zu entrauschenden Patch, erreicht wird.

Hierzu kann z. B. die Erzeugung des rauschreduzierten Volumenbilddatensatzes in Abhängigkeit von dem Wert dieser Wichtungsfaktoren $a_i$ und/oder der - maximalen - Anzahl der Basiselemente der einzelnen Linearkombinationen vorgenommen werden.

Um auf diese Weise die Anzahl der Basiselemente in der Linearkombination in optimaler Weise zu begrenzen, gibt es verschiedene Möglichkeiten.

So kann vorzugsweise zur Nachbildung einer Volumenbild-Teilmenge durch eine Linearkombination eine Optimierungsfunktion genutzt werden, wobei ein Ziel der Optimierungsfunktion die Optimierung einer Ähnlichkeit der Linearkombinationen mit der Volumenbild-Teilmenge ist.

Grundsätzliche Methoden zur Berechnung einer Ähnlichkeit sind dem Fachmann bekannt. Bevorzugt wird eine Ähnlichkeit mittels einer definierten Abstandsfunktion bzw. einer Norm, welche die Ähnlichkeit repräsentiert, quantitativ in einer Optimierungsfunktion angegeben. Zum Beispiel ist es möglich, die Optimierungsfunktion in Form einer zu minimierenden Kostenfunktion anzugeben, welche beispielsweise in einem besonders einfachen Fall wie folgt aussehen kann:

$$\min\left[\|I - L\|_2^2\right] \qquad (2)$$

Das heißt, es wird einfach das Quadrat der euklidischen Abstandsnorm zwischen der zu rekonstruierenden, d. h. zu entrauschenden Volumenbild-Teilmenge I und der Linearkombination L gebildet und diese Funktion minimiert, um eine möglichst ähnliche Rekonstruktion des Patches zu erhalten. An Stelle der Norm kann dabei aber auch eine andere geeignete Abstandsfunktion verwendet werden. Methoden zur Minimierung solcher Kostenfunktionen oder eine Optimierung mittels anderer Optimierungsfunktionen sind dem Fachmann hinreichend bekannt und brauchen daher hier nicht weiter erläutert zu werden.

Allerdings würde bei dieser einfachen Funktion die Anzahl der Basiselemente in der optimalen Linearkombination sehr hoch sein.

Um diese Anzahl zu begrenzen, könnten dann beispielsweise alle Basiselemente, deren Wichtungsfaktoren unter einem vorgegebenen Wert a liegen, aus der optimalen Linearkombination verworfen werden.

Eine weitere Möglichkeit, die zusätzlich oder alternativ angewandt werden kann, wäre eine Auswahl einer maximalen Anzahl von Basiselementen, z. B. gemäß einem vorgegebenen Maximalwert, aus der Linearkombination, wobei die Basiselemente mit den höchsten Wichtungsfaktoren ausgewählt und die übrigen Basiselemente verworfen werden. Dadurch würden rauschreduzierte Linearkombinationen entstehen, die nicht mehr Basiselemente aufweisen, als der Maximalwert vorgibt.

Um zu einer optimalen Linearkombination zu gelangen, in der die Anzahl der Basiselemente bereits begrenzt ist, könnten die vorgenannten Maßnahmen, einzeln oder in Kombination, bereits in der Optimierungsfunktion genutzt werden, d. h. bei jeder Linearkombination L, deren Ähnlichkeit zum "Originalpatch" in der Optimierungsfunktion berechnet wird, wird zunächst die Anzahl der Basiselemente entsprechend begrenzt.

Eine weitere, alternativ oder zusätzlich anwendbare, bevorzugte Methode basiert auf der Nutzung eines Strafterms in der Optimierungsfunktion, in welchen die Anzahl der Basiselemente in der Linearkombination eingehen. Generell ist die Konstruktion von Straftermen dem Fachmann bekannt. Die bevorzugten Strafterme sind so gestaltet, dass ein unerwünschter Zustand auf eine Weise in die Optimierungsfunktion eingeht, die der Optimierung zuwiderläuft. Die Kostenfunktion in Gleichung (2) könnte also z. B. wie folgt geändert werden:

$$\min\left[b\|I - L\|_2^2 + cN^2\right] = \min[PK] \qquad (3)$$

Dabei ist N die Anzahl der Basiselemente einer Linearkombination L. Die Anzahl der Basiselemente der jeweiligen Linearkombination N geht also hier mit einem Wichtungsfaktor c versehen quadriert als Strafterm in die Optimierungsfunktion ein. Anhand der Gleichung (3) sieht man sehr gut, dass somit kürzere Linearkombinationen, also diejenigen, die vergleichsweise wenige Basiselemente umfassen, bevorzugt werden. Diejenige der "kurzen" Linearkombinationen, die die Volumenbild-Teilmenge am besten nachbildet, wird von der Optimierungsfunktion ausgewählt, da diese die Funktion minimiert.

Bei den zuvor beschriebenen Verfahren wurde jede Volumenbild-Teilmenge I für sich in eine optimale Linearkombination L bzw. durch eine Linearkombination L rekonstruiert. Diese Linearkombination L ist somit eine "entrauschte Volumenbild-Teilmenge". Diese so entrauschten Volumenbild-Teilmengen bzw. Linearkombinationen L müssen dann nur noch zu einem entrauschten Volumenbilddatensatz kombiniert werden. Das kann erfolgen, indem die entrauschten Volumenbild-Teilmengen in umgekehrter Weise, wie die Bildung der Volumenbild-Teilmengen aus dem ursprünglichen Volumenbilddatensatz erfolgte, d. h. durch umgekehrte Anwendung der dabei benutzten Regeln (wieder) zusammengesetzt werden.

Um in der Optimierung noch über die Volumenbild-Teilmengen jeweils hinausgehende Bildinformationen zu nutzen, könnte bevorzugt die Optimierungsfunktion so gewählt sein, dass simultan mehrere Linearkombination für verschiedene der Volumenbild-Teilmengen optimiert werden. Vorzugsweise umfasst die Optimierungsfunktion dabei einen weiteren Term, insbesondere in Form eines, ggf. gewichteten, Strafterms, mittels dessen eine Ähnlichkeit einer Kombination der in der Optimierungsfunktion berücksichtigen Linearkombinationen berücksichtigt wird.

D. h. es kann beispielsweise eine simultane Optimierung der Linearkombinationen für alle Patches (und somit deren simultane Entrauschung) eines größeren Volumenbildbereichs, besonders bevorzugt für den kompletten Volumenbilddatensatz, erfolgen, wobei die Ähnlichkeit des daraus rekonstruierten entrauschten Volumenbilddatensatzes mit dem Original-Volumenbilddatensatz in der Optimierung mit berücksichtigt wird. Ein Beispiel für eine solche Optimierungsfunktion könnte für einen kompletten Volumenbilddatensatz X wie folgt definiert sein:

$$\min\left[d\|X - Y\|_2^2 + e\left\|\sum PK\right\|_2^2\right] \qquad (4)$$

PK ist hierbei die Optimierungsfunktion für ein einzelnes Patch, hier z. B. gemäß Gleichung (3). Es könnte aber auch eine andere Optimierungsfunktion für ein einzelnes Patch genutzt werden, z. B. die einfache Funktion aus Gleichung (2) eingesetzt werden. Y ist der entrauschte Volumenbilddatensatz, der aus den aktuellen in der Funktion PK genutzten Linearkombinationen wie oben bereits beschrieben zusammengesetzt werden kann. Um nur einen Teil des Volumenbilddatensatzes zu entrauschen, müssten nur die Bilddatensätze X und Y entsprechend diesem Teil gewählt werden. d und f sind wählbare Gewichtungsfaktoren, um festlegen zu können, welcher Aspekt bzw. Term stärker die Optimierung beeinflusst, die "lokale Ähnlichkeit" der Patches mit den Linearkombinationen oder die "globale Ähnlichkeit" der entrauschten Volumenbilddaten mit den originalen Volumenbilddaten. Die optimalen Werte dieser Gewichtungsfaktoren können durch Tests gefunden werden.

Die genannten Maßnahmen, um die Anzahl der Basiselemente in den Linearkombination zu reduzieren, können auch in Kombination miteinander angewandt werden.

Um Optimierungen der vorgenannten Art vorzunehmen, sind bereits geeignete Softwaremodule für zweidimensionale Entrauschungsverfahren bekannt. Sofern diese Verfahren für die weitere Verarbeitung die zweidimensionalen Patches ohnehin zunächst in Vektoren umsetzen, beispielsweise einen 3 x 3 - Patch in einen 9-stelligen Vektor, könnten die Softwaremodule mit nur geringen Modifikationen auch für das erfindungsgemäße dreidimensionale Verfahren weiter genutzt werden. Es könnte hierzu z. B. einfach dafür gesorgt werden, dass die dreidimensionalen Patches in Vektoren umgeschrieben werden, z. B. ein 3 x 3 x 3-Patch in einen 27-stelligen Vektor. Ebenso müssen die "entrauschten" Patches dann wieder von der Vektorform in eine dreidimensionale Form umgeschrieben werden.

Die Erstellung eines Basiselement-Verzeichnisses kann auf ähnliche Weise wie die oben beschriebene Entrauschung selbst erfolgen, nur dass hierfür die genannten Trainings-Volumenbilddatensätze genutzt werden.

So kann auch zur Erstellung des Basiselement-Verzeichnisses eine Nachbildung zumindest eines Teils der Volumenbild-Teilmengen der Trainings-Volumenbilddatensätze durch eine Linearkombination von Basiselementen erfolgen, wobei unter anderem die gleichen oder dieselben Optimierungsfunktionen genutzt werden können.

Es kann dann beispielsweise eine Entscheidung, ob ein Basiselement in das Basiselement-Verzeichnis übernommen wird, in Abhängigkeit von der Häufigkeit erfolgen, wie oft ein Basiselement zur Nachbildung von Volumenbild-Teilmengen eines Trainings-Volumenbilddatensatzes genutzt wurde.

Als initiales Start-Basiselement-Verzeichnis (initiales Dictionary) kann hierzu eine beliebige Sammlung von Basiselementen dienen, die dann im Rahmen des Trainingsverfahrens selektiert und/oder modifiziert werden. Auch hier ist wieder eine Nutzung von (gegebenenfalls geringfügig modifizierten) Softwaremodulen möglich. Beispiele für konkrete Verfahren und ein initiales Dictionary für den zweidimensionalen Fall werden u. a. in M. Elad und M. Aharon "Image Denoising Via Learned Dictionaries and Sparse representation" [IEEE Transactions on Image Processing, Vol. 15, Issue 12 (2006), S. 3736-3745] angegeben. Insofern wird auch insbesondere auf den dort genannten K-SVD-Algorithmus (SVD = Single Value Decompositon) und das redundante DCT Dictionary (DCT = Discrete Cosinus Transformation) als initiales Dictionary für das Trainingsverfahren verwiesen, die im erfindungsgemäßen dreidimensionalen Verfahren ganz analog genutzt werden können.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Die Figuren sind in der Regel nicht maßstäblich. Es zeigen:

Figur 1 eine schematische Darstellung eines Volumenbilddatensatzes und seine Unterteilung in Volumenbild-Teilmengen,

Figur 2 eine Darstellung der Bildung einer Linearkombination von Volumen-Bildelementen,

Figur 3 eine beispielhafte schematische Darstellung eines Basiselement-Verzeichnisses,

Figur 4 einen Ablaufplan für einen möglichen Ablauf eines erfindungsgemäßen Verfahrens zur Erstellung eines Basiselement-Verzeichnisses,

Figur 5 einen Ablaufplan für einen möglichen Ablauf eines erfindungsgemäßen Verfahrens zur Entrauschung,

Figur 6 eine grob schematische Darstellung eines bildgebenden Systems mit einem Ausführungsbeispiel einer erfindungsgemäßen Entrauschungsvorrichtung in einer Steuereinrichtung zur Durchführung des Verfahrens,

Figur 7 eine grob schematische Darstellung einer erfindungsgemäßen Entrauschungsvorrichtung,

Figur 8 ein Schnittbild aus einem Schichtstapel von Schnittbildern quer durch den Bauchraum eines Patienten vor einer Entrauschung,

Figur 9 das Schnittbild aus Figur 8 nach einer Entrauschung mit einem erfindungsgemäßen Verfahren.

Bei den folgenden Erläuterungen wird davon ausgegangen, dass es sich bei der bildgebenden Anlage bzw. dem bildgebenden medizintechnischen System 1 um ein Computertomographie-System 1 handelt. Grundsätzlich ist das Verfahren aber auch im Hinblick auf andere bildgebende Anlagen einsetzbar.

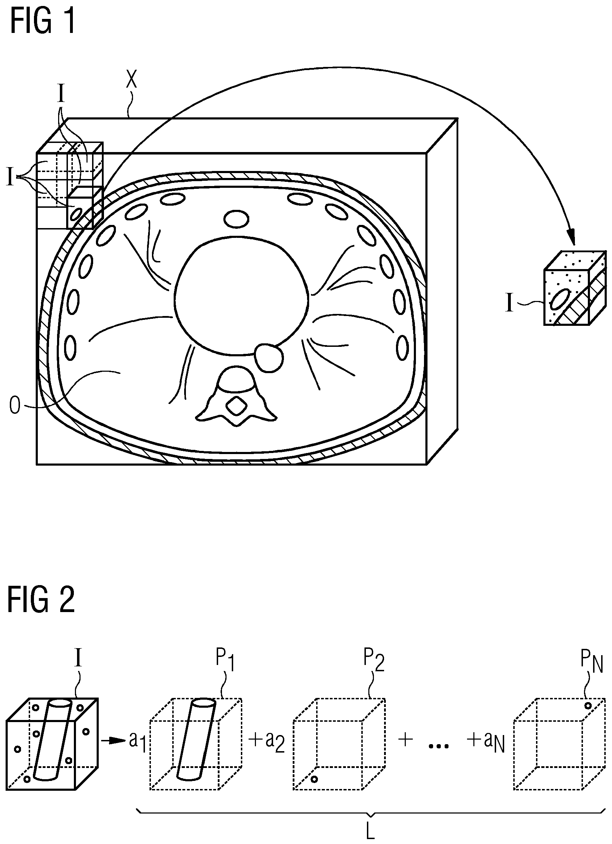

Figur 1 zeigt eine schematische Darstellung eines Volumenbilddatensatzes X, beispielsweise eine Vereinigung mehrerer Schnittbilder bzw. einen Bildstapel eines Computertomographie-Systems 1. Das hier dargestellte Objekt O könnte beispielsweise ein Bereich des Torsos eines Menschen sein. Beispielsweise könnten die einzelnen Schnittbilder 512 x 512 Pixel umfassen, und es können sich beispielsweise 40 Schichten übereinander befinden, um nur ein konkretes Beispiel zu nennen. Es sind aber selbstverständlich auch alle anderen Größen möglich. Die Schnittbilder werden in dem Volumenbilddatensatz X passend übereinandergelegt und die Pixel werden zu Voxeln V in dem Volumenbilddatensatz X. Vorzugsweise ist der Abstand der Schichtbilder zueinander so gewählt, dass die Voxel annähernd würfelförmig sind, was aber nicht zwingend ist. Alternativ oder zusätzlich (in einem vierdimensionalen Volumen) könnte eine Raumrichtung auch eine zeitliche Dimension repräsentieren.

Zur Durchführung des erfindungsgemäßen Verfahrens werden Gruppen von Voxeln des Volumenbilddatensatzes X Volumenbild-Teilmengen I (also den Patches I) zugeordnet. Das kann beispielsweise durch Kopieren der betreffenden Voxel in individuelle Speicherbereiche oder durch Abfahren des Volumenbilddatensatzes mit einer (dreidimensionalen) Maske erfolgen.

Dem Verfahren stehen danach einzelne Volumenbild-Teilmengen I von beispielsweise 3 x 3 x 3 Voxel zur Verfügung, wie dies mit dem Pfeil in der Figur schematisch dargestellt wird. Diese Volumenbild-Teilmengen I überlappen einander vorzugsweise in allen Raumrichtungen, beispielsweise jeweils um einen Voxel.

In der Figur 2 wird die Bildung einer Linearkombination L von Volumen-Basiselementen $P_1, P_2, ..., P_N$ grafisch erläutert. Eine Volumenbild-Teilmenge I enthält z. B. eine Anordnung von Voxeln V mit verschiedenen Farbwerten. Bei Computertomographieaufnahmen sind dies in der Regel einfache Grautöne. In einem anschließenden Schritt wird versucht, diese Anordnung nachzubilden, indem die Volumenbild-Teilmenge aus mehreren Volumen-Basiselementen $P_1$ - $P_N$, sogenannten Primitiven, aufgebaut wird. Der Einfluss der einzelnen Volumen-Basiselemente $P_1, P_2, ..., P_N$ auf die Nachbildung wird mittels Wichtungsfaktoren $a_1, a_2, ..., a_N$ wiedergegeben.

In der Darstellung werden lediglich zur Verdeutlichung nur schematisch gezeichnete Bildelemente als Volumen-Basiselemente $P_1, P_2, ..., P_N$ gezeigt. Die Volumenbild-Teilmenge I, die hier eine zylindrische Struktur und mehrere Punkte zeigt, wird in Basiselemente $P_1, P_2, ..., P_N$ unterteilt, wobei das erste Basiselement $P_1$ hier einen Zylinder und die übrigen Basiselemente $P_2, ..., P_N$ Punkte an unterschiedlichen Positionen enthalten. Eine Wichtung könnte beispielsweise durch Variation der Transparenz bzw. die Grautöne dieser Bildelemente wiedergegeben werden.

Die Gesamtheit der ausgewählten Basiselemente $P_1, P_2, ..., P_N$ ergibt dann die Linearkombination L, aus der im weiteren Verfahren der rauschreduzierte Volumenbilddatensatz Y erstellt wird.

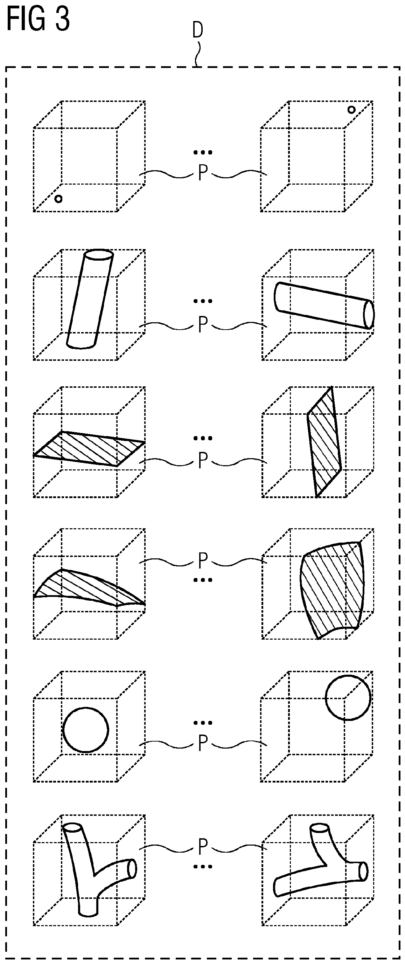

Die Basiselemente finden sich in einem Basiselement-Verzeichnis D, welches dem Entrauschungsverfahren vorliegt. Figur 3 zeigt ein beispielhaftes Basiselement-Verzeichnis D. Zur besseren Übersicht sind auch hier die Bildinformationen der verschiedenen Basiselemente durch bestimmte Formen schematisch visualisiert. Die Punkte zwischen zwei Basiselementen P sollen verdeutlichen, dass weitere Basiselemente P dieser Art in dem Basiselement-Verzeichnis D enthalten sind.

In der Regel sind die Volumen-Basiselemente des Basiselement-Verzeichnisses D abstrakter aufgebaut, insbesondere, da es sich hierbei ja auch üblicherweise um Bildpunktraster bzw. Rastergrafiken handelt. Beispielsweise kann es wie oben beschrieben in einem Trainingsverfahren aus einem modifizierten redundanten DCT Dictionary oder anderen geeigneten initialen Dictionary entwickelt worden sein.

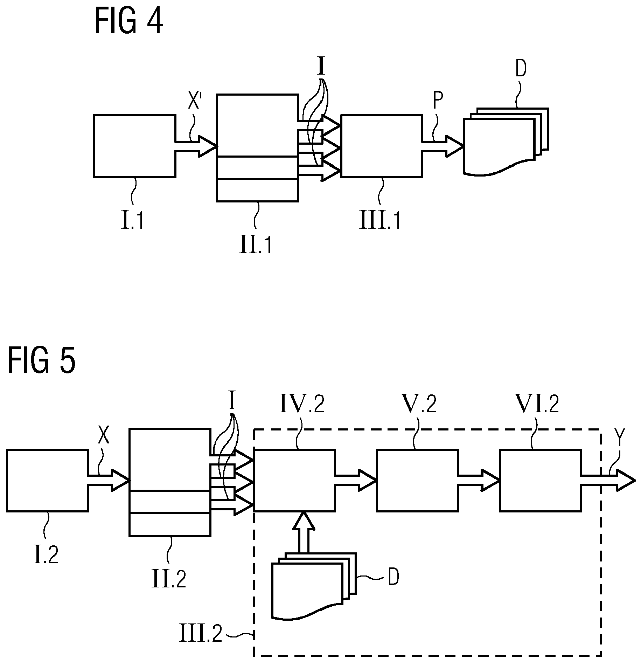

Figur 4 zeigt nun einen Ablaufplan für einen möglichen Ablauf eines erfindungsgemäßen Verfahrens zur Erstellung eines Basiselement-Verzeichnisses.

In einem ersten Schritt 1.1 wird ein Volumenbilddatensatz als Trainings-Volumenbilddatensatz X' zur Verfügung gestellt. Dieser Trainings-Volumenbilddatensatz X' stammt beispielsweise von Computertomographieaufnahmen, die bei anderen Patienten, insbesondere medizinisch bedingt, mit einer höheren Strahlendosis aufgenommen worden sind und daher nur ein geringes Rauschen aufweisen.

In einem weiteren Schritt II.1 wird der Trainings-Volumenbilddatensatz X' in Volumendaten-Teilmengen I unterteilt, die insbesondere einander überlappen, so dass die Wahrscheinlichkeit verringert wird, dass relevante Basiselemente P durch die Zerlegung zerschnitten werden.

In einem dritten Schritt III.1 werden, wie oben erläutert, durch das Training die Basiselemente P ermittelt, die dann in das Basiselement-Verzeichnis D aufgenommen werden.

Figur 5 zeigt einen Ablaufplan für einen möglichen Ablauf eines erfindungsgemäßen Verfahrens zur Entrauschung.

In einem ersten Schritt 1.2 wird ein Volumenbilddatensatz X zur Verfügung gestellt. Dieser Volumenbilddatensatz X stammt beispielsweise von Computertomographieaufnahmen, die bei einem Patienten mit einer vergleichsweise geringen Strahlendosis aufgenommen worden sind und demzufolge ein relativ hohes Rauschen aufweisen.

In einem weiteren Schritt II.2 wird der Volumenbilddatensatz X' in Volumendaten-Teilmengen I unterteilt, die ebenfalls bevorzugt einander überlappen.

In einem dritten Schritt III.2 wird die Entrauschung basierend auf einer Auswahl von Basiselementen P aus einem Basiselement-Verzeichnis D durchgeführt. Dies kann bevorzugt mit einer der Methoden erfolgen, wie sie oben bereits erläutert wurden, beispielsweise anhand der Gleichungen (2) bis (4).

In dem hier dargestellten Beispiel-Ablauf werden zunächst in Schritt IV.2 Linearkombinationen aus den Basiselementen P des Basiselement-Verzeichnisses D gebildet. Die Bildinformation der Linearkombination L wird dann in Schritt V.2 mit der betreffenden Volumenbild-Teilmenge I verglichen und dabei werden dann wenig relevante Basiselemente aus der Linearkombination gemäß einer Optimierungsfunktion entfernt. In der Regel werden die Schritte IV.2 und V.2 hierzu wiederholt bzw. rekursiv durchlaufen, so dass letztendlich alle gewünschten Bereiche des Volumenbilddatensatzes entrauscht werden können. Hier können insbesondere Optimierungsfunktionen, wie sie in den Gleichungen (2) oder (3) oben dargestellt wurden, genutzt werden.

In Schritt VI.2 wird schließlich aus den einzelnen Linearkombinationen L ein entrauschtes Bild zusammengesetzt, wobei die Linearkombinationen an die Stelle der Volumenbild-Teilmengen treten.

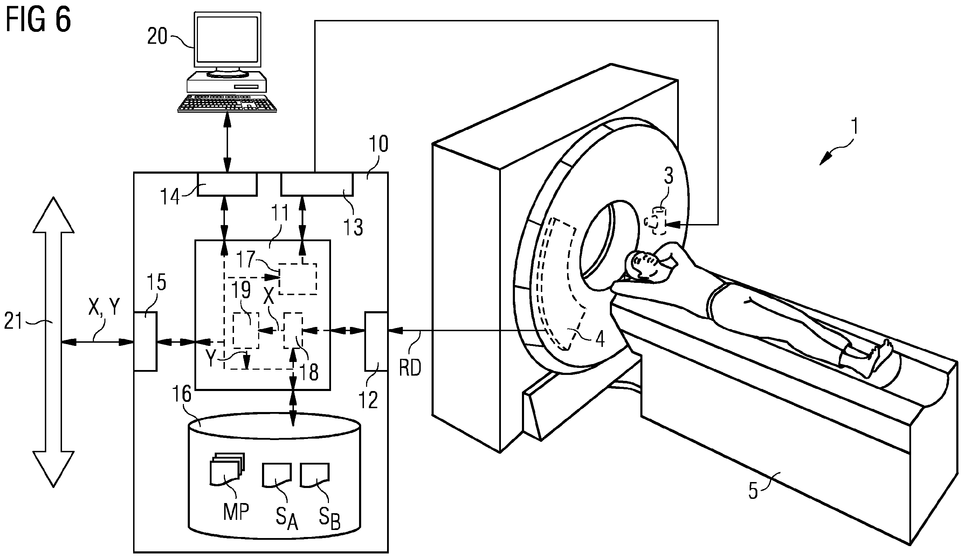

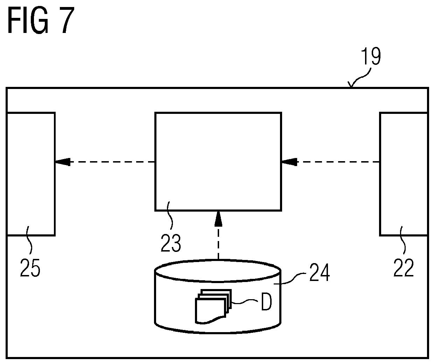

Figur 6 zeigt grob schematisch ein Computertomographiesystem 1 ("CT-System") mit einer Steuereinrichtung 10 zur Durchführung des erfindungsgemäßen Verfahrens. Das Computertomographiesystem 1 weist in üblicher Weise einen Scanner 2 mit einer Gantry auf, in der eine Röntgenquelle 3 rotiert, die jeweils einen Patienten durchstrahlt, welcher mittels einer Liege 5 in einen Messraum der Gantry hineingeschoben wird, so dass die Strahlung auf einen der Röntgenquelle 3 jeweils gegenüberliegenden Detektor 4 trifft. Es wird ausdrücklich darauf hingewiesen, dass es sich bei dem Ausführungsbeispiel gemäß Figur 7 nur um ein Beispiel eines CTs handelt und die Erfindung auch an beliebigen CT-Konstruktionen, beispielsweise mit ringförmigem feststehendem Röntgendetektor und/oder mehreren Röntgenquellen, genutzt werden kann.

Ebenso sind bei der Steuereinrichtung 10 im Wesentlichen nur die Komponenten dargestellt, die für die Erläuterung der Erfindung erforderlich sind. Grundsätzlich sind derartige CT-Systeme und zugehörige Steuereinrichtungen sowie das Messverfahren dem Fachmann bekannt und brauchen daher nicht im Detail erläutert zu werden.

Eine Kernkomponente der Steuereinrichtung 10 ist hier ein Prozessor 11, auf dem verschiedene Komponenten in Form von Softwaremodulen realisiert sind. Die Steuereinrichtung 10 weist weiterhin eine Terminalschnittstelle 14 auf, an die ein Terminal 20 angeschlossen ist, über das ein Bediener die Steuereinrichtung 10 und somit das Computertomographiesystem 1 bedienen kann. Eine weitere Schnittstelle 15 ist eine Netzwerkschnittstelle zum Anschluss an einen Datenbus 21, um so eine Verbindung zu einem RIS bzw. PACS herzustellen. Über diesen Bus 21 können beispielsweise erzeugte Bilddaten vor oder nach einem Entrauschen an andere Einheiten, wie Befundungsstationen, Massenspeicher (nicht dargestellt) oder dergleichen, übermittelt werden.

Über eine Steuerschnittstelle 13 kann von der Steuereinrichtung 10 der Scanner 2 angesteuert werden, d. h. es werden z. B. die Rotationsgeschwindigkeit der Gantry, die Verschiebung der Patientenliege 5 und die Röntgenquelle 3 selbst gesteuert, um eine Messung durchzuführen. Über eine Akquisitionsschnittstelle 12 werden die dabei erzeugten Rohdaten RD aus dem Detektor 4 ausgelesen. Weiterhin weist die Steuereinrichtung 10 eine Speichereinheit 16 auf, in der u. a. verschiedene Messprotokolle MP hinterlegt sind.

Als eine Softwarekomponente ist auf dem Prozessor 11 u. a. eine Messsteuereinheit 17 implementiert. Diese Messsteuereinheit 17 steuert über die Steuerschnittstelle 13 auf Basis eines oder mehrerer ausgewählter Messprotokolle MP, welche ggf. vom Bediener über das Terminal 20 modifiziert wurden, den Scanner 2 an, um eine Messung durchzuführen und Daten zu akquirieren.

Eine weitere Komponente auf dem Prozessor 11 ist eine Bilddaten-Rekonstruktionseinheit 18, mit welcher aus den über die Datenakquisitions-Schnittstelle 12 erhaltenen Rohdaten RD die gewünschten Bilddaten, hier z. B. die zu entrauschenden Volumenbilddaten X, rekonstruiert werden.

Auf dem Prozessor 11 ist hier zusätzlich eine erfindungsgemäße Entrauschungsvorrichtung 19 realisiert, die zu entrauschende Volumenbilddaten X von der Bilddaten-Rekonstruktionseinheit 18 empfangen kann, wie oben beschrieben entrauscht und die entrauschten Volumenbilddaten Y wieder zur Verfügung stellt.

Diese Entrauschungsvorrichtung 19 muss aber nicht notwendigerweise mit der Steuereinrichtung 10 direkt verbunden oder Teil dieser sein. Sie kann auch als unabhängige Vorrichtung z. B. Teil des mit Hilfe des Datenbusses 21 realisierten Netzwerks oder in eine andere Einheit, wie die genannte Befundungsstation bzw. eine Workstation, integriert sein. In diesem Fall können beispielsweise die zu entrauschenden Volumenbilddaten X über den Datenbus 21 an die Entrauschungsvorrichtung gesendet werden und die Entrauschung erfolgt z. B. in der Befundungsstation. Weiterhin könnte die Entrauschungsvorrichtung 19 aber auch im Terminal 20 integriert oder selbst Teil der Bilddaten-Rekonstruktionseinheit 18 sein.

Insbesondere bei einer bevorzugten Realisierung der Entrauschungsvorrichtung 19 durch Softwaremodule sind nahezu beliebige Varianten realisierbar.

Die Entrauschungsvorrichtung 19 ist in Figur 7 genauer dargestellt. Zum Empfang von Volumenbilddaten X umfasst sie eine Schnittstelle 22. Diese Schnittstelle 22 kann beispielsweise die von der Bilddaten-Rekonstruktionseinheit 18 bereitgestellten Volumenbilddaten X übernehmen.

Weiterhin umfasst die Entrauschungsvorrichtung 19 eine Speichereinheit 24, in der das Basiselement-Verzeichnis D vorliegt. In einer Steuerreinheit 10 wie in Figur 6 könnte das Basiselement-Verzeichnis D auch in der Speichereinheit 16 enthalten sein, wobei in diesem Fall die Entrauschungsvorrichtung 19 vorteilhaft direkt auf die Speichereinheit 16 zugreifen könnte.

Die entrauschten Daten können über eine Schnittstelle 24 an weitere Systeme zur Ansicht oder zur weiteren Bearbeitung ausgegeben werden. An Stelle der hier dargestellten separaten Schnittstelle könnten die entrauschten Daten auch über die erstgenannte Schnittstelle 22 ausgegeben werden, sofern diese bidirektional arbeitet.

Da wie beschrieben das Training bzw. die Erstellung des Basiselement-Verzeichnisses D mit zum Teil den gleichen oder ähnlichen Prozeduren wie die Entrauschung der Volumenbilddaten X selbst durchgeführt werden kann, ist die Entrauschungsvorrichtung 19 bevorzugt so ausgestaltet, dass mit ihr nicht nur eine Entrauschung vorgenommen, sondern insbesondere auch eine Erstellung oder Veränderung bzw. Ergänzung des Basiselement-Verzeichnisses D durchgeführt werden kann.

Mit Hilfe des erfindungsgemäßen Verfahrens können Volumenbilddaten mit einer weit geringeren Strahlendosis erstellt werden als mit herkömmlichen Systemen, da durch die Entrauschung die Qualität erheblich verbessert werden kann, ohne relevanten Informationsgehalt in den Volumenbilddaten X zu verlieren. Es können aber auch bereits bestehende Volumenbilddaten X bearbeitet und damit verbessert werden.

Insbesondere bietet es sich an, das Verfahren auch zur Verbesserung von zweidimensionalen Schnittbildern zu nutzen, wenn diese als Schichtstapel vorliegen. Es kann dann aus dem Schichtstapel wie oben beschrieben ein Volumenbilddatensatz erstellt werden bzw. der Schichtstapel wird wie ein Volumenbilddatensatz behandelt. Dann erfolgt die erfindungsgemäße dreidimensionale Entrauschung und anschließend werden die zweidimensionalen Schnittbilder wieder aus dem entrauschten Volumenbilddatensatz betrachtet. Dabei reicht schon ein Schichtstapel von drei Schnittbildern aus, um eine signifikante Verbesserung zu erreichen.

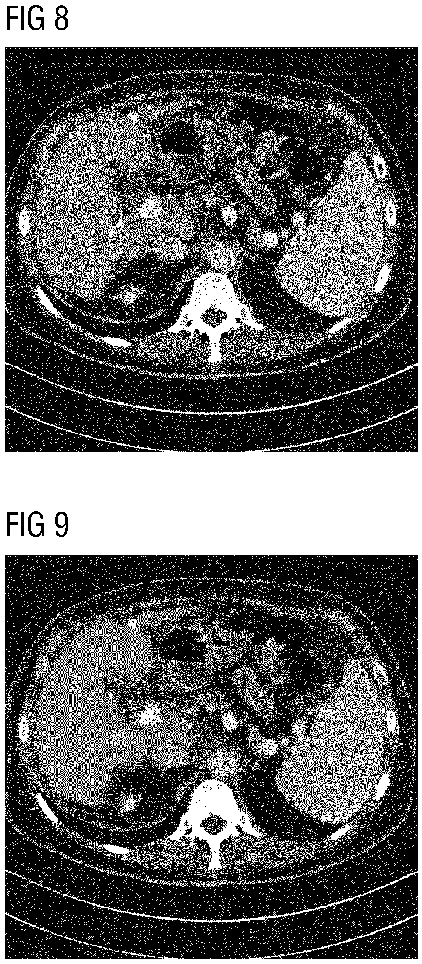

Anhand der Figuren 8 und 9 kann die Wirkung des Verfahrens eindrucksvoll verdeutlicht werden. Figur 8 zeigt ein Schnittbild aus einem Schichtstapel von Schnittbildern quer durch den Bauchraum eines Patienten. Das Schnittbild wurde mittels eines Computertomographiesystems bei relativ geringer Dosis erzeugt und ist daher recht stark verrauscht. Figur 9 zeigt zum Vergleich das Bild nach einer Entrauschung mit dem erfindungsgemäßen Verfahren.

Es wird abschließend noch einmal darauf hingewiesen, dass es sich bei den vorhergehend detailliert beschriebenen Verfahren sowie bei den dargestellten Vorrichtungen lediglich um Ausführungsbeispiele handelt, welche vom Fachmann in verschiedenster Weise modifiziert werden können, ohne den Bereich der Erfindung zu verlassen. Weiterhin schließt die Verwendung der unbestimmten Artikel "ein" bzw. "eine" nicht aus, dass die betreffenden Merkmale auch mehrfach vorhanden sein können. Ebenso schließen die Begriff "Einheit" und "Modul" nicht aus, dass die betreffenden Komponenten aus mehreren zusammenwirkenden Teil-Komponenten bestehen, die gegebenenfalls auch räumlich verteilt sein können.

**EP 3 376 466 A1**

**Patentansprüche**

1. Verfahren zur Entrauschung eines Volumenbilddatensatzes (X) eines Objekts (O), umfassend die Schritte:

   - Bereitstellung des Volumenbilddatensatzes (X),
   - Bereitstellung eines Basiselement-Verzeichnisses (D) umfassend eine Anzahl von Volumen-Basiselementen $(P, P_1, P_2, ..., P_N)$,
   - Bildung von Volumenbild-Teilmengen (I) des Volumenbilddatensatzes (X),
   - Nachbildung zumindest eines Teils der Volumenbild-Teilmengen(I) durch eine Linearkombination (L) von Volumen-Basiselementen $(P, P_1, P_2, ..., P_N)$ des Basiselement-Verzeichnisses (D),
   - Erzeugung eines rauschreduzierten Volumenbilddatensatzes (Y) unter Nutzung der Linearkombination (L) von Volumen-Basiselementen $(P, P_1, P_2, ..., P_N)$ der Volumenbild-Teilmengen (I).

2. Verfahren nach einem der vorangehenden Ansprüche, wobei benachbarte Volumenbild-Teilmengen (I) in zumindest einer Raumrichtung, vorzugsweise in mindestens zwei Raumrichtungen, besonders bevorzugt in mindestens drei Raumrichtungen miteinander überlappen.

3. Verfahren nach einem der vorangehenden Ansprüche, wobei ein überwiegender Teil der Volumenbild-Teilmengen (I) die gleiche Größe haben.

4. Verfahren nach einem der vorangehenden Ansprüche,
   wobei Volumenbild-Teilmengen (I) bevorzugt kleiner als 1/10, insbesondere kleiner als 1/100 des Volumendatensatzes (X) sind
   und/oder
   wobei die Ausdehnung der Volumenbild-Teilmengen (I) in allen drei Raumrichtungen mindestens zwei Bildpunkte, bevorzugt mindestens drei Bildpunkte, umfasst und/oder maximal 15 Bildpunkte umfasst.

5. Verfahren nach einem der vorangehenden Ansprüche, wobei den Volumen-Basiselementen $(P, P_1, P_2, ..., P_N)$ einer Linearkombinationen (L) zur Nachbildung einer Volumenbild-Teilmenge (I) jeweils Wichtungsfaktoren $(a_1, ... a_n)$ zugeordnet sind und die Erzeugung des rauschreduzierten Volumenbilddatensatzes (Y) in Abhängigkeit von dem Wert der Wichtungsfaktoren $(a_1, ... a_n)$ und/oder der Anzahl der Volumen-Basiselemente $(P, P_1, P_2, ..., P_N)$ der Linearkombinationen (L) vorgenommen wird.

6. Verfahren nach Anspruch 5, wobei zur Nachbildung einer Volumenbild-Teilmenge (I) durch eine Linearkombination (L) eine Optimierungsfunktion zur Optimierung einer Ähnlichkeit der Linearkombinationen (L) mit der Volumenbild-Teilmenge (I) genutzt wird,
   und dabei vorzugsweise die Volumen-Basiselemente $(P, P_1, P_2, ..., P_N)$ in der Linearkombination (L) reduziert und/oder begrenzt werden, besonders bevorzugt durch zumindest eine der folgenden Maßnahmen:

   - Verwerfen von Volumen-Basiselementen $(P, P_1, P_2, ..., P_N)$ aus der Linearkombination (L), deren Wichtungsfaktoren $(a_1, ... a_n)$ unter einem vorgegebenen Wert liegen,
   - Auswahl einer maximalen Anzahl von Volumen-Basiselementen $(P, P_1, P_2, ..., P_N)$ aus der Linearkombination (L), wobei die Volumen-Basiselemente $(P, P_1, P_2, ..., P_N)$ mit den höchsten Wichtungsfaktoren $(a_1, ... a_n)$ ausgewählt werden, und Verwerfen der übrigen Basiselemente $(P, P_1, P_2, ..., P_N)$,
   - Nutzung eines Strafterms in der Optimierungsfunktion, in welchen die Anzahl der Volumen-Basiselemente $(P, P_1, P_2, ..., P_N)$ in der Linearkombination (L) eingeht.

7. Verfahren nach Anspruch 6, wobei die Optimierungsfunktion so gewählt ist, dass simultan mehrere Linearkombinationen (L) für verschiedene der Volumenbild-Teilmengen (I) optimiert werden
   und die Optimierungsfunktion dabei vorzugsweise einen weiteren Term umfasst, in welchem eine Ähnlichkeit einer Kombination der in der Optimierungsfunktion berücksichtigten Linearkombinationen (L) mit einem Teil des Volumenbilddatensatzes (X), der die in der Optimierungsfunktion berücksichtigten Volumenbild-Teilmengen (I) umfasst, berücksichtigt wird.

8. Verfahren zur Erstellung eines Basiselement-Verzeichnisses (D) für ein Verfahren zur Entrauschung eines Volumenbilddatensatzes (X) eines Objekts (O), insbesondere nach einem der vorstehenden Ansprüche, umfassend die Schritte:

12

- Bereitstellung eines Trainings-Volumenbilddatensatzes (X'),
- Bildung von Volumenbild-Teilmengen (I) des Trainings-Volumenbilddatensatzes (X'),
- Ermitteln von Volumen-Basiselementen in den Volumenbild-Teilmengen (I),
- Erstellung eines Basiselement-Verzeichnisses (D) aus Volumen-Basiselementen (P, $P_1$, $P_2$, ..., $P_N$) der Volumenbild-Teilmengen (I).

9. Verfahren nach Anspruch 8, wobei zur Erstellung des Basiselement-Verzeichnisses (D) eine Nachbildung zumindest eines Teils der Volumenbild-Teilmengen (I) durch eine Linearkombination (L) von Volumen-Basiselementen (P, $P_1$, $P_2$, ..., $P_N$) erfolgt und eine Entscheidung, ob ein Volumen-Basiselement (P, $P_1$, $P_2$, ..., $P_N$) in das Basiselement-Verzeichnis (D) übernommen wird, in Abhängigkeit von der Häufigkeit erfolgt, wie oft ein Volumen-Basiselement (P, $P_1$, $P_2$, ..., $P_N$) zur Nachbildung von Volumenbild-Teilmengen(I) eines Trainings-Volumenbilddatensatzes (X') genutzt wurde.

10. Verfahren gemäß einem der vorangehenden Ansprüche, wobei der Volumenbilddatensatz (X) des Objekts (O) auf Messdaten eines bildgebenden medizintechnischen Bildgebungssystems (1), bevorzugt eines Computertomographiesystems (1) basiert.

11. Entrauschungsvorrichtung (19) zur Entrauschung eines Volumenbilddatensatzes (X) mit

- einer Schnittstelle (22), mittels derer ein Volumenbilddatensatz (X) an die Entrauschungseinrichtung (19) bereitgestellt werden kann,
- eine Speichereinheit (24), in der ein Basiselement-Verzeichnis (D) umfassend eine Anzahl von Volumen-Basiselementen (P, $P_1$, $P_2$, ..., $P_N$) zur Bereitstellung für die Entrauschung enthalten ist,
- einer Entrauschungseinheit (23), welche dazu ausgelegt ist,

i) Volumenbild-Teilmengen (I) des Volumenbilddatensatzes (X) zu bilden,
ii) mindestens eine Volumenbild-Teilmenge (I) mittels einer Linearkombination (L) von Volumen-Basiselementen (P, $P_1$, $P_2$, ..., $P_N$) des Basiselement-Verzeichnisses (D) nachzubilden,
iii) einen rauschreduzierten Volumenbilddatensatz (X') unter Nutzung der Linearkombination (L) von Volumen-Basiselementen (P, $P_1$, $P_2$, ..., $P_N$) der Volumenbild-Teilmengen (I) zu erzeugen.

12. Steuereinrichtung (10) zur Steuerung eines medizintechnischen Bildgebungssystems (1) oder medizintechnisches Bildgebungssystem (1), vorzugsweise Computertomographiesystem (1), mit einer Entrauschungsvorrichtung (19) nach Anspruch 11.

13. Computerprogrammprodukt mit einem Computerprogramm, welches direkt in eine Speichereinrichtung einer Entrauschungsvorrichtung (19) ladbar ist, mit Programmabschnitten, um alle Schritte des Verfahrens nach einem der Ansprüche 1 bis 10 auszuführen, wenn das Computerprogramm in der Entrauschungsvorrichtung (19) ausgeführt wird.

14. Computerlesbares Medium, auf welchem von einer Rechnereinheit einlesbare und ausführbare Programmabschnitte gespeichert sind, um alle Schritte des Verfahrens nach einem der Ansprüche 1 bis 10 auszuführen, wenn die Programmabschnitte von der Rechnereinheit ausgeführt werden.

15. Computerlesbares Medium, auf welchem sich mindestens ein von einer Rechnereinheit lesbares Basiselement-Verzeichnis (D) zur Entrauschung eines Volumenbilddatensatzes (X) befindet, wobei dieses Basiselement-Verzeichnis (D) insbesondere nach einem Verfahren gemäß einem der Ansprüche 8 bis 10 erstellt worden ist.

## FIG 1

## FIG 2

# FIG 3

FIG 4

I

X'

I.1

II.1

III.1

P

D

FIG 5

I

IV.2          V.2          VI.2

X

Y

I.2

II.2

III.2

D

# FIG 6

EP 3 376 466 A1

## FIG 7

FIG 8

FIG 9

Europäisches
Patentamt

European
Patent Office

Office européen
des brevets

# EUROPÄISCHER RECHERCHENBERICHT

**Nummer der Anmeldung**

EP 17 16 0756

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | MECHLEM KORBINIAN ET AL: "Dictionary-based image denoising for dual energy computed tomography", PROGRESS IN BIOMEDICAL OPTICS AND IMAGING, SPIE - INTERNATIONAL SOCIETY FOR OPTICAL ENGINEERING, BELLINGHAM, WA, US, Bd. 9783, 22. März 2016 (2016-03-22), Seiten 97830E-97830E, XP060066051, ISSN: 1605-7422, DOI: 10.1117/12.2216749 ISBN: 978-1-5106-0027-0 * das ganze Dokument * ----- | 1-7, 10-15 | INV. G06T5/00 |
| X,D | M. ELAD, M. AHARON: "Image Denoising Via Sparse and Redundant Representations Over Learned Dictionaries", IEEE TRANSACTIONS ON IMAGE PROCESSING, Bd. 15, Nr. 12, Dezember 2006 (2006-12), Seiten 3736-3745, XP11149944, * sec. III; Seite 3738, rechte Spalte - Seite 3741, linke Spalte * ----- | 8,9 | |

RECHERCHIERTE SACHGEBIETE (IPC)

G06T

Der vorliegende Recherchenbericht wurde für alle Patentansprüche erstellt

| Recherchenort | Abschlußdatum der Recherche | Prüfer |
|---|---|---|
| München | 2. Mai 2017 | Werling, Alexander |

EPO FORM 1503 03.82 (P04C03)

**IN DER BESCHREIBUNG AUFGEFÜHRTE DOKUMENTE**

**In der Beschreibung aufgeführte Patentdokumente**

- US 8600137 B2

- US 8605977 B2

**In der Beschreibung aufgeführte Nicht-Patentliteratur**

- **M. ELAD ; M. AHARON.** Image Denoising Via Learned Dictionaries and Sparse representation. *IEEE Transactions on Image Processing,* 2006, vol. 15 (12), 3736-3745